# EUROPÄISCHE PATENTSCHRIFT

(11) **EP 1 998 188 B1**
(45) Veröffentlichungstag und Bekanntmachung des Hinweises auf die Patenterteilung: **25.02.2015**
(21) Anmeldenummer: 08009061.6
(22) Anmeldetag: 16.05.2008
(51) Int. Cl.: G01T 7/08

(54) **Aufnahmesystem für mindestens eine Probe**
Fixing system for at least one sample
Système de réception pour au moins une sonde

(30) Priorität: 30.05.2007 DE 202007007658 U
(43) Veröffentlichungstag der Anmeldung: 03.12.2008
(73) Patentinhaber: Berthold Technologies GmbH & Co. KG, 75323 Bad Wildbad (DE)
(72) Erfinder: Klett, Alfred, Dr., 75305 Neuenbürg (DE); Schaefer, Wolfgang, 75323 Bad Wildbad (DE)
(74) Vertreter: Patentanwälte Ruff, Wilhelm, Beier, Dauster & Partner

(56) Entgegenhaltungen:
- DE-A1- 2 117 405
- GB-A- 927 225
- JP-A- S58 123 489
- US-A- 2 595 550

## Beschreibung

### Technischer Hintergrund

Die Erfindung betrifft ein Aufnahmesystem für mindestens eine Probe zur Verwendung in einem radiometrischen Messgerät.

Bei sehr empfindlichen radiometrischen Messgeräten zur Aktivitätsmessung (Low Level-Zähler) wird die auf die natürliche Untergrundstrahlung zurückgehende Zählrate üblicherweise durch eine Reihe von Maßnahmen auf niedrigere Werte reduziert. Dies wird vor allem durch Abschirmung des/der Detektoren gegen externe Strahlung, durch die Verwendung extrem radioaktivitätsarmer Detektormaterialien (Elektrolyt-Kupfer) sowie durch Verwendung von Antikoinzidenzschaltungen zur Eliminierung der Beiträge der kosmischen Strahlung erreicht.

Der trotz der Anwendung dieser Maßnahmen verbleibende Resteffekt der Untergrundstrahlung wird zu einem wesentlichen Teil durch natürliches radioaktives Radon und dessen Zerfallsprodukte im Messvolumen unterhalb der Detektoren verursacht.

### Stand der Technik

Bei einem bekannten radiometrischen Messgerät, das unter der Bezeichnung "LB 770" von der Anmelderin vertrieben wird, ist der Probenraum durch ein Volumen zwischen einer flachen zylindrischen Vertiefung als Aufnahmeraum einer Aufnahmeplatte und dem Detektorgehäuse definiert, wobei mehrere Vertiefungen in der horizontal verschiebbaren Aufnahmeplatte angeordnet sind. Die Aufnahmeplatte wird nach Beladung der Vertiefungen mit den Proben möglichst nahe an das Eintrittsfenster des Detektors herangeführt, um das Volumen zwischen Probe und Detektor, das in der Regel Radon enthält, möglichst gering zu halten.

Es ist auch bekannt, das Volumen zwischen dem Aufnahmeraum der Probe und dem Detektor mit Stickstoff oder Zählgas zu spülen.

Mit diesen Massnahmen ist allerdings nur eine begrenzte Reduzierung der unerwünschten Untergrundstrahlung erreichbar.

Aus der gattungsbildenden JP 58-123489 A ist ein Messgerät mit einem Aufnahmesystem bekannt, bei dem die Aufnahmeplatte von einer unterhalb der Messposition angeordeneten Andrück-Einrichtung gegen die Unterseite eines Detektorgehäuse gedrückt wird.

### Darstellung der Erfindung

Aufgabe der Erfindung ist eine Weiterbildung des in der JP 58-123489 A.

Diese Aufgabe wird gemäß dem kennzeichnenden Teil des Patentanspruchs 1 gelöst.

Der Grundgedanke der Erfindung besteht darin, das bekannte Schubladensystem so weiterzubilden, dass die Proben gasdicht abdichtet werden, wenn die Schublade ihre Messposition an der Unterseite des Detektorgehäuses erreicht hat.

Vorteilhafte Ausgestaltungen zur mechanisch-konstruktiven Realisierung dieses Erfindungsgedankens sind den Unteransprüchen zu entnehmen.

Da Radon und dessen Zerfallsprodukte innerhalb eines geschlossenen Messvolumens zerfallen, wenn sich die Schublade in der Messposition befindet, nimmt die Aktivitätskonzentration an Radon und dessen Zerfallsprodukten im Messvolumen kontinuierlich ab. Eine Zunahme des Radonpegels durch Diffusion in das Messvolumen wird in der Messposition durch eine umlaufende Dichtung ausgeschlossen. Da in der Regel die mittlere Messdauer groß gegenüber der Zerfallsdauer der Radonisotope und insbesondere deren Zerfallsprodukte ist, nimmt die mittlere Radonkonzentration im Messvolumen einen geringeren Wert an als die externe Radonkonzentration. Dies gilt vor allem für die Radon-Zerfallsprodukte, die sich als Schwermetalle vorzugsweise auf Oberflächen der Schublade oder des Detektors niederschlagen (plate-out). Dementsprechend reduziert sich auch die mittlere Nulleffekt-Zählrate und bewirkt niedrigere Nachweisgrenzen, d.h., das radiometrische Messgerät wird empfindlicher.

### Kurze Beschreibung der Zeichnungen

Ein bevorzugtes Ausführungsbeispiel des erfindungsgemäßen Aufnahmesystems wird nun anhand von Zeichnungen näher erläutert, es zeigen:
- Figur 1:: Eine Schnittdarstellung des Aufnahmesystems in der Messposition in der Ebene I-I der Figur 4,
- Figur 2:: eine Schnittdarstellung des Aufnahmesystems kurz vor Erreichen der Messposition,
- Figur 3:: eine Schnittdarstellung des Aufnahmesystems in der Beladeposition,
- Figur 4:: eine Aufsicht auf das Aufnahmesystem in der Messposition nach Figur 1, und
- Figur 5:: eine Schnittdarstellung in der Ebene II-II durch das Aufnahmesystem der Figur 4.

### Beschreibung des Ausführungsbeispiels

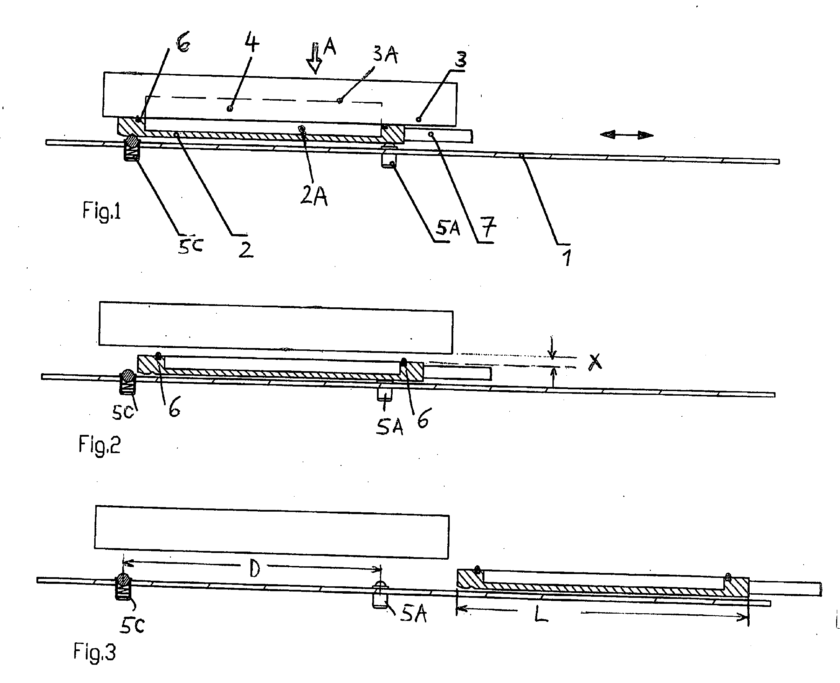

Auf einer Grundplatte 1 ist eine Aufnahmeplatte 2 horizontal verschiebbar geführt, in Figur 1 bis 3 sind drei verschiedene Positionen dieser Bewegung dargestellt:
Figur 1 zeigt die Messposition, in der die Aufnahmeplatte 2 mittels Druckelementen 5 von unten gegen die Unterseite des Detektorgehäuses 3 angedrückt wird. Das Detektorvolumen 4, das als Vertiefung 3A des Detektorgehäuses 3 dargestellt ist, ist wie üblich durch ein Eintrittsfenster (Fensterfolie), das mit der Unterseite des Detektorgehäuses 3 fluchtet, vom Probenvolumen 2A getrennt, in dem sich die zu messende Probe befindet.

Um das Probenvolumen 2A umlaufende Dichtungen 6 bewirken eine Abdichtung zwischen den einander zugewandten Seiten der Aufnahmeplatte 2 und des Detektorgehäuses 3. Dadurch wird ein nach aussen abgeschlossenes Probenvolumen 2A zwischen der Aufnahmeplatte 2 einerseits und dem Eintrittsfenster des Detektorgehäuses 3 gebildet.

Auf der Grundplatte 1 sind seitlich von der Aufnahmeplatte 2 Führungsprofile 9A,9B gehalten, in denen die Seitenflächen der Aufnahmeplatte 2 mittels Laufrollen 10 geführt sind, so dass eine schlittenartige Bewegung zustande kommt.

In der Grundplatte 1 sind beim dargestellten Ausführungsbeispiel drei federbelastete Druckelemente 5A,5B,5C angebracht, wobei die beiden Druckelemente 5A und 5B symmetrisch zur Längsachse I-I angeordnet sind und das Druckelement 5C in der Längsachse I-I liegt. Zwischen den beiden Druckelementen 5A,5B einerseits und dem Druckelement 5C andererseits liegt ein Abstand D, der geringfügig geringer ist als die Länge L der Aufnahmeplatte 2. Die beiden gegenüberliegenden Druckelemente 5A,5B weisen einen Abstand M voneinander auf.

Ebenfalls im Abstand M voneinander sind auf der Unterseite der Aufnahmeplatte 2 Rinnen 11A, 11B eingelassen, die sich über nahezu die gesamte Länge L der Aufnahmeplatte 2 erstrecken, jedoch in einem Abstand LX von der vorderen Stirnseite der Aufnahmeplatte 2 enden.

Auf der Oberseite der Führungsprofile 9A,9B sind Aussparungen 12 angebracht, deren Zahl der Anzahl der Laufrollen 10 entspricht, beim dargestellten Ausführungsbeispiel also insgesamt 6 Stück. Anordnung und Abstand der Aussparungen 12 entsprechen hierbei Anordnung und Abstand der Laufrollen 10.

Die Unterseite der Aufnahmeplatte 2 ist in ihrem vorderen Bereich rampenartig abgeschrägt.

Die Funktion dieser Bauteile zur Führung und Anhebung der Aufnahmeplatte ist wie folgt:

Solange sich die Aufnahmeplatte 2 in ihrer Beladeposition (Figur 3) oder in einer Einschubposition (Figur 2) befindet, greifen die kugelförmig dargestellten, federbelasteten Bauteile der Druckelemente 5A und 5B in die Rinnen 11 A und 11 B ein, das Druckelement 5C befindet sich außerhalb der Reichweite der rampenartigen Abschrägung (Figur 2). Dies hat zur Folge, dass in Bereichen außerhalb der Messposition (Figur 2 und Figur 3) die Oberkante der Aufnahmeplatte 2 von der Unterkante des Detektorgehäuses 3 einen Abstand X (Figur 2) beibehält, der so groß bemessen ist, dass trotz der Bauhöhe der umlaufenden Dichtung 6 ein berührungsfreies Einschieben der Aufnahmeplatte 2 mit den Proben in den Bereich unterhalb des Detektorgehäuses 3 erfolgen kann, da die Druckelemente 5A und 5B in "ihre" zugeordneten Rinnen 11A und 11 B eintauchen.

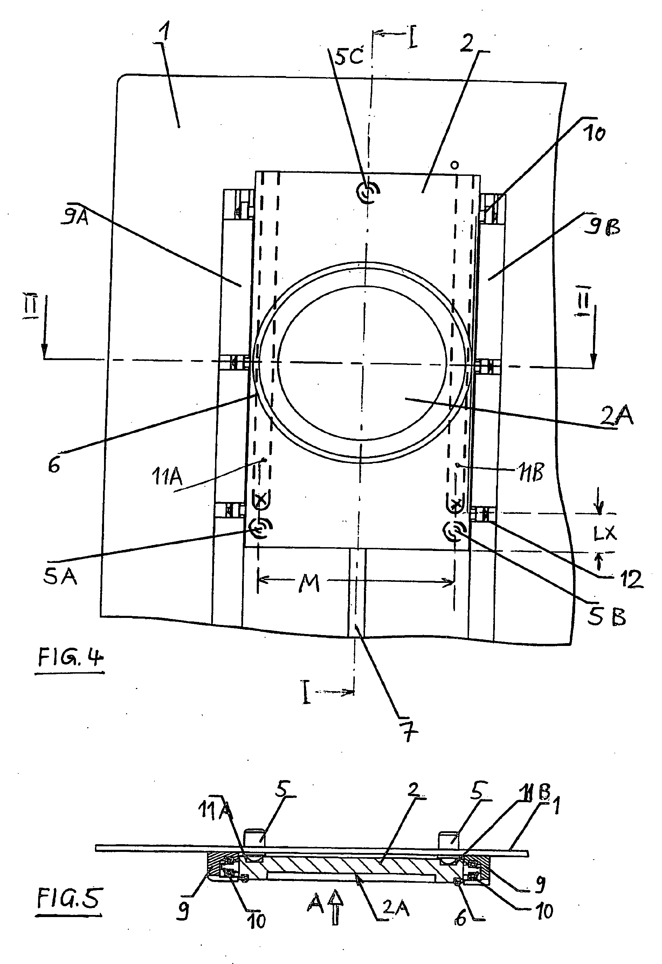

Nähert sich nun beim Einschieben die Aufnahmeplatte 2 mit ihrer vorderen Stirnseite dem Druckelement 5C (Figur 2), so befinden sich auch die Druckelemente 5A,5B an der in Figur 4 mit einem Kreuz gekennzeichneten Endposition innerhalb ihrer Rinne 11A, 11B, hier sind die Rinnen 11A, 11B mit einer entsprechenden Abschrägung versehen.

Ein weiteres Einschieben der Aufnahmeplatte 2 über die in Figur 2 dargestellte Position hin zur Messposition der Figur 1 bewirkt, dass die untere rampenähnliche Abschrägung der Aufnahmeplatte 2 einerseits auf das Druckelement 5C aufgleitet, ebenso die Druckelemente 5A,5B die Aufnahmeplatte 2 nach oben drücken, da sie ihre Rinne 11A,11B verlassen müssen. Es tritt also bei dieser Bewegung eine gleichzeitige Vertikalbewegung der Aufnahmeplatte 2 ein, in deren Verlauf auch die Laufrollen 10 in ihre Aussparungen 12 in den seitlichen Führungsprofilen 9A,9B nach oben ausweichen können und somit die Anhebung der Aufnahmeplatte 2 nicht behindern.

In der Endposition beim Einschieben der Aufnahmeplatte 2 wird damit die Messposition erreicht, wie sie in den Figuren 1,4 und 5 in verschiedenen Darstellungen gezeigt ist, wobei die Figur 4 die Ansicht der Aufnahmeplatte mit den umgebenden Bauteilen in Richtung des Pfeiles A in Figur 1 und Figur 5 darstellt.

Über die umlaufende Dichtung 6 liegt somit die Aufnahmeplatte 2 dichtend an der Unterseite des Detektorgehäuses 3 an, mit der Folge, dass kein "Radonaustausch" des Probenvolumens 2A mit der Außenwelt mehr auftreten kann, die Konzentration des Radons und dessen Zerfallsprodukte im Probenvolumen 2A folglich abnimmt und im entsprechenden Maße die Messempfindlichkeit des Messgerätes zunimmt.

In umgekehrter Reihenfolge kann nach Beendigung der Messung mit Hilfe einer Griffstange 7 die Aufnahmeplatte 2 aus der Messposition zurückgezogen werden, die Aufnahmeplatte 2 verlässt das Druckelement 5C, die Druckelemente 5A und 5B können wieder in die Rinnen 11A, 11B eintauchen, und die Aufnahmeplatte 2 senkt sich wieder um das Maß X ab und kann bis zur Entlade-/Beladeposition (Figur 3) herausgezogen werden.

### Bezugszeichen

- 1: Grundplatte
- 2: Aufnahmeplatte
- 2A: Probenvolumen
- 3: Detektorgehäuse
- 3A: Vertiefung
- 4: Detektorvolumen
- 5A,B,C: Druckelemente
- 6: Dichtung
- 7: Griffstange
- 8: Luftspalt
- 9A,9B: Führungsprofile
- 10: Laufrollen
- 11 A,B: Rinnen
- 12: Aussparungen

## Patentansprüche

1. Aufnahmesystem für mindestens eine Probe zur Verwendung in einem radiometrischen Messgerät unterhalb von einem Detektorgehäuse (3), mit
- einer Grundplatte (1),
- einer bezüglich der Grundplatte (1) horizontal in Richtung einer Messposition verschiebbaren Aufnahmeplatte (2) mit mindestens einer Vertiefung als Probenvolumen (2A), wobei
- Einrichtungen vorgesehen sind, die die Aufnahmeplatte (2) beim Übergang in ihre Messposition vertikal an die Unterseite des Detektorgehäuses (3) dichtend andrücken,
**dadurch gekennzeichnet, dass** die Grundplatte (1) mindestens zwei vertikal federnde Druckelemente (5A,5B) aufweist, die bis kurz vor Erreichen der Messposition in Rinnen (11) der Aufnahmeplatte (2) geführt sind.

2. Aufnahmesystem nach Anspruch 1, **dadurch gekennzeichnet, dass** die Grundplatte (1) seitliche Führungsprofile (9A,9B) aufweist, in denen die Seitenflächen der Aufnahmeplatte (2) mittels Laufrollen (10) geführt sind.

3. Aufnahmesystem nach Anspruch 2, **dadurch gekennzeichnet, dass** die Führungsprofile (9A,9B) Aussparungen (12) auf ihrer dem Detektorgehäuse (3) zugewandten Seite aufweisen, in die Laufrollen (10) der Aufnahmeplatte (2) in deren Messposition angehoben werden.

4. Aufnahmesystem nach Anspruch 1, **dadurch gekennzeichnet, dass** die Unterseite der Aufnahmeplatte (2) in ihrem vorderen Bereich rampenartig abgeschrägt ist, um bei Annäherung an die Messposition auf eines der federnden Druckelemente (5) aufgleiten zu können.

5. Aufnahmesystem nach Anspruch 1, **dadurch gekennzeichnet, dass** die Aufnahmeplatte (2) in ihrem hinteren Bereich eine Griffstange (7) aufweist.

6. Aufnahmesystem nach Anspruch 1, **dadurch gekennzeichnet, dass** die Aufnahmeplatte (2) auf ihrer Oberseite eine um das Probenvolumen (2A) umlaufende Dichtung (6) aufweist.

## Claims

1. Fixing system for at least one sample for use in a radiometric measuring instrument below a detector housing (3), comprising
- a base plate (1),
- a fixing plate (2) with at least one depression as a sample volume (2A) and displaceable in relation to the base plate (1) horizontally in the direction towards a measuring position, wherein
- devices are provided to sealingly press the fixing plate (2) vertically to the bottom side of the detector housing (3) during transfer into the respective measuring position,
**characterized in that** the base plate (1) includes at least two vertically resilient pressure elements (5A, 5B) which are guided in grooves (11) of the fixing plate (2) up to shortly before reaching the measuring position.

2. Fixing system according to claim 1, **characterized in that** the base plate (1) includes lateral guiding profiles (9A, 9B) in which the side faces of the fixing plate (2) are guided by means of track rollers (10).

3. Fixing system according to claim 2, **characterized in that** the guiding profiles (9A, 9B) have recesses (12) on their side facing the detector housing (3), wherein the track rollers (10) of the fixing plate (2) are raised in the respective measuring position.

4. Fixing system according to claim 1, **characterized in that** the bottom side of the fixing plate (2) has a ramp-type slant in the vicinity of its front, in order to allow sliding onto one of the resilient pressure elements (5) when approaching the measuring position.

5. Fixing system according to claim 1, **characterized in that** the fixing plate (2) has a handle bar (7) in its back area.

6. Fixing system according to claim 1, **characterized in that** the fixing plate (2) has a circumferential sealing (6) around the sample volume (2A) on its top surface.

## Revendications

1. Système de réception pour au moins un échantillon pour l'utilisation dans un appareil de mesure radiométrique en dessous d'un boîtier de détecteur (3), comprenant
- une plaque de base (1),
- une plaque de réception (2) déplaçable horizontalement en direction d'une position de mesure par rapport à la plaque de base (1) et dotée d'au moins un renfoncement en tant que volume d'échantillon (2A),
- des dispositifs étant prévus, lesquels pressent de manière étanche la plaque de réception (2) verticalement contre le côté inférieur du boîtier de détecteur (3) lors de son passage à sa position de mesure,
**caractérisé en ce que** la plaque de base (1) comprend au moins deux éléments de pression (5A, 5B) verticalement élastiques qui sont guidés dans des canaux (11) de la plaque de réception (2) jusqu'à ce que la position de mesure soit quasiment atteinte.

2. Système de réception selon la revendication 1, **caractérisé en ce que** la plaque de base (1) comprend des profilés de guidage latéraux (9A, 9B) dans lesquels les surfaces latérales de la plaque de réception (2) sont guidées au moyen de galets de roulement (10).

3. Système de réception selon la revendication 2, **caractérisé en ce que** les profilés de guidage (9A, 9B) comprennent des évidements (12) sur leur côté tourné vers le boîtier de détecteur (3), dans lesquels évidements les galets de roulement (10) de la plaque de réception (2) sont relevés dans sa position de mesure.

4. Système de réception selon la revendication 1, **caractérisé en ce que** le côté inférieur de la plaque de réception (2) est biseauté en forme de rampe dans sa région avant, afin de pouvoir glisser sur l'un des éléments de pression élastiques (5) lors du rapprochement de la position de mesure.

5. Système de réception selon la revendication 1, **caractérisé en ce que** la plaque de réception (2) comprend dans sa région arrière une tige de préhension (7).

6. Système de réception selon la revendication 1, **caractérisé en ce que** la plaque de réception (2) comprend sur son côté supérieur un joint d'étanchéité périphérique (6) autour du volume d'échantillon (2A).
